(19) Europäisches Patentamt
European Patent Office
Office européen des brevets

(11) **EP 4 700 705 A1**

(12) **EUROPEAN PATENT APPLICATION**
published in accordance with Art. 153(4) EPC

(43) Date of publication:
**25.02.2026 Bulletin 2026/09**

(21) Application number: **24791836.0**

(22) Date of filing: **28.03.2024**

(51) International Patent Classification (IPC):
**G06T 7/70** (2017.01)

(52) Cooperative Patent Classification (CPC):
**G06T 7/20; G06T 7/70; G06V 20/52**

(86) International application number:
**PCT/CN2024/084617**

(87) International publication number:
**WO 2024/217250 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.04.2023  CN 202310462214**

(71) Applicant: **Lumi United Technology Co., Ltd.
Shenzhen, Guangdong 518055 (CN)**

(72) Inventors:
• **KONG, Li**
  **Shenzhen, Guangdong 518055 (CN)**
• **YAO, Qin**
  **Shenzhen, Guangdong 518055 (CN)**
• **ZENG, Zhaoze**
  **Shenzhen, Guangdong 518055 (CN)**
• **HUANG, Binbin**
  **Shenzhen, Guangdong 518055 (CN)**

(74) Representative: **Metida
Gyneju str. 16
01109 Vilnius (LT)**

(54) **TARGET DETECTION METHOD AND APPARATUS, DEVICE, AND COMPUTER-READABLE STORAGE MEDIUM**

(57) The present disclosure relates to a target detection method and apparatus, a device, and a computer-readable storage medium. Specifically, the method comprises: displaying a target detection page; acquiring position information of a target object in a target space, wherein the position information is determined by motion trajectory data of the target object in the target space; and, in the target detection page, displaying in real time a position mark corresponding to the target object, wherein the page position of the position mark is determined on the basis of the position information of the target object in the target space.

```
┌─────────────────────────────────────────────────┐
│        displaying a target detection page        │──── 101
└─────────────────────────────────────────────────┘
                         │
                         ▼
┌─────────────────────────────────────────────────┐
│   acquiring position information of a target     │
│   object in a target space, wherein the position │
│   information is determined by motion trajectory │──── 102
│   data of the target object in the target space  │
└─────────────────────────────────────────────────┘
                         │
                         ▼
┌─────────────────────────────────────────────────┐
│  displaying in real time a position marker       │
│  corresponding to the target object in the       │
│  target detection page, wherein the page         │
│  position of the position marker is determined   │──── 103
│  based on the position information of the target │
│  object in the target space                      │
└─────────────────────────────────────────────────┘
```

FIG. 2

EP 4 700 705 A1

## Description

This disclosure claims priority to the Chinese patent application filed with the China National Intellectual Property Administration on April 21, 2023, with application number 202310462214.X and entitled "Target Detection Method, Apparatus, Device, and Computer-Readable Storage Medium", the entire contents of which are incorporated herein by reference.

## TECHNICAL FIELD

The present disclosure relates to the field of computer technologies, and in particular to a target detection method, an apparatus, a device, and a computer readable storage medium.

## BACKGROUND

With the continuous development of Internet of Things (IoT) technologies, products related to IoT technologies keep advancing. Smart home services have gradually entered people's daily life. Implementation of smart home services mainly relies on the position of a target object in a home space; therefore, position information of the target object in the home space needs to be acquired accurately. Related art can cluster the target object in a target space with a radar equipment, and then track a motion trajectory of the target object to obtain its position information.

However, although such art can detect the position information of the target object, when multiple objects are present it clusters closely spaced objects into one, preventing the device from capturing each object's trajectory and thus from accurately locating them. Consequently, smart home services cannot be delivered effectively and user experience deteriorates.

## SUMMARY OF THE DISCLOSURE

The present disclosure provides a target detection method, an apparatus, a device and a computer readable storage medium that, by updating the motion trajectory of a target object based on point cloud data in the target space, can accurately obtain the position information of each object according to its motion trajectory and thereby improve user experience.

The present disclosure provides a target detection method, performed by a computer device, the method including:

displaying a target detection page;
acquiring position information of a target object in a target space, wherein the position information is determined by motion trajectory data of the target object in the target space; and
in the target detection page, displaying in real time a position marker corresponding to the target object, wherein a page position of the position marker is determined based on the position information of the target object in the target space.

The present disclosure further provides a target detection apparatus, wherein the target detection apparatus includes:

a display unit, configured to display a target detection page;
an acquisition unit, configured to acquire position information of a target object in a target space, wherein the position information is determined by motion trajectory data of the target object in the target space;
a presentation unit, configured to display in real time a position marker corresponding to the target object in the target detection page, wherein a page position of the position marker is determined based on the position information of the target object in the target space.

The present disclosure also provides a computer device including a processor, a memory, and a computer program stored in the memory and executable by the processor, wherein when the computer program is executed by the processor, the processor implements the target detection method described above.

The present disclosure also provides a computer readable storage medium storing computer readable instructions which, when executed by a processor, implement the target detection method described above.

The present disclosure also provides a computer program product including computer readable instructions which, when executed by a processor, implement the target detection method described above.

Embodiments of the present disclosure may: display a target detection page; acquire position information of a target object in a target space, the position information being determined by motion trajectory data of the target object in the target space; and in real time, display a position marker corresponding to the target object in the target detection page, wherein a page position of the position marker is determined based on the position information of the target object in the target space. Thus, after the user terminal renders the target detection page, the system uses the motion trajectory data to pinpoint the target object's position in the target space, preventing location confusion that arises when multiple objects are too close; it then renders the marker in real time, providing a visual service. In short, by updating each object's trajectory from point cloud data, the solution accurately obtains every object's position and improves user experience.

## BRIEF DESCRIPTION OF THE DRAWINGS

To illustrate the technical solutions provided in the present disclosure more clearly, drawings to be used in embodiments of the present disclosure are introduced briefly below. Obviously, the drawings described below are merely some embodiments of the present disclosure, and a person of ordinary skill in the art may obtain other drawings from these drawings without creative efforts.

FIG. 1 is a schematic diagram of an application scenario of a target detection system provided by an embodiment of the present disclosure.
FIG. 2 is a flow chart diagram of steps of a target detection method provided by an embodiment of the present disclosure.
FIG. 3 is a schematic diagram of an information display page and a monitoring page provided by an embodiment of the present disclosure.
FIG. 4 is a flow chart diagram of further steps of the target detection method provided by an embodiment of the present disclosure.
FIG. 5 is a flow schematic diagram of associating point clouds with motion trajectories provided by an embodiment of the present disclosure.
FIG. 6 is a flow schematic diagram of a radar device acquiring position information of a target object and transmitting the position information to a terminal provided by an embodiment of the present disclosure.
FIG. 7 is a first structural schematic diagram of a target detection apparatus provided by an embodiment of the present disclosure.
FIG. 8 is a second structural schematic diagram of the target detection apparatus provided by an embodiment of the present disclosure.
FIG. 9 is a structural schematic diagram of an electronic device provided by an embodiment of the present disclosure.

## DETAILED DESCRIPTION

To make the objectives, technical solutions and advantages of the present disclosure clearer, the present disclosure is further described in detail below with reference to the accompanying drawings and embodiments. It should be understood that the specific embodiments described herein are merely for illustrating the present disclosure and are not intended to limit the present disclosure.

Embodiments of the present disclosure provide a target detection method, apparatus and computer readable storage medium. Specifically, the embodiments of the present disclosure are described from the perspective of a target detection apparatus, which may be integrated in an electronic device. The electronic device may be a server or a user terminal. The server may be an independent physical server, a server cluster or distributed system formed by a plurality of physical servers, or a cloud server providing basic cloud computing services such as cloud services, cloud databases, cloud computing, cloud functions, cloud storage, network services, cloud communication, middleware services, domain name services, security services, CDN, big data and artificial intelligence platforms. The user terminal may be a smart phone, a smart control panel, a tablet computer, a notebook computer, a desktop computer, a smart speaker, a smart watch, a smart appliance, a vehicle mounted terminal, an intelligent voice interaction device, an aircraft, etc., but is not limited thereto.

The target detection method provided by embodiments of the present disclosure may be applied to various application scenarios, such as but not limited to a smart home space, and is illustrated below by way of specific embodiments.

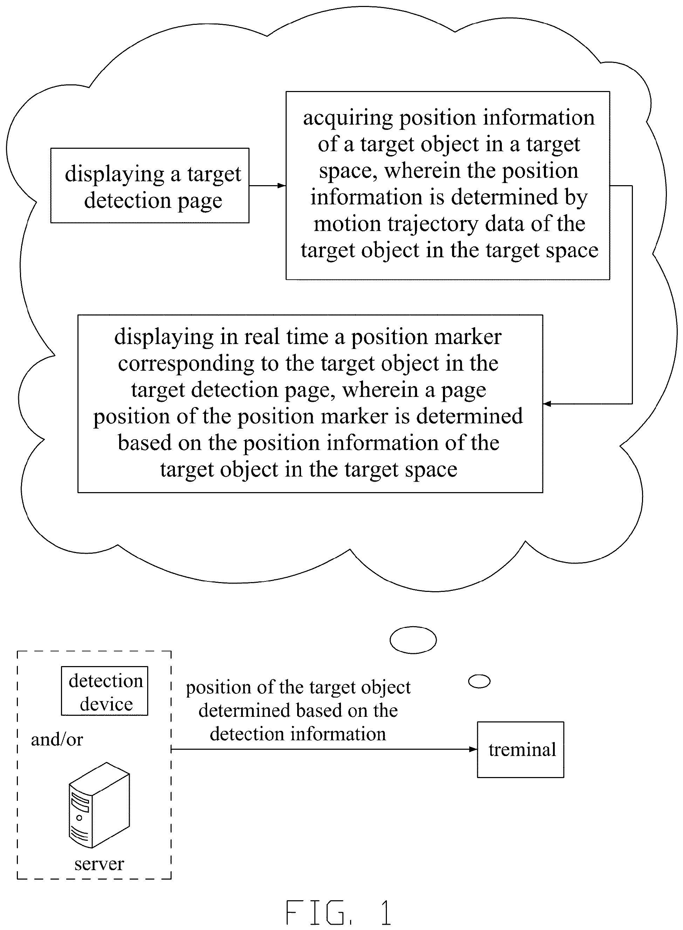

For example, referring to FIG. 1, a schematic diagram of a target detection system provided by an embodiment of the present disclosure is shown. The system may include a terminal and a data processing end, and a specific implementation scenario may be as follows:

The terminal may be configured to: display a target detection page; acquire position information of a target object in a target space, wherein the position information is determined by motion trajectory data of the target object in the target space; and in the target detection page, display in real time a position marker corresponding to the target object, wherein a page position of the position marker is determined based on the position information of the target object in the target space.

The data processing end may be a detection device or a server, or a combination of a detection device and a server. The detection device may be a device capable of detecting the position of a face, for example, a body sensor, a millimeter wave radar, etc.

Specifically, the data processing end may be configured to: acquire a point cloud data frame in a target space collected in real time by a detection device, the point cloud data frame including at least one point cloud; based on a distance relationship, query, from historical motion trajectories, a target motion trajectory associable with the point cloud, wherein the target motion trajectory is jointly constructed from a point cloud in one or more frames of historical point cloud data; calculate a target trajectory point of the target motion trajectory based on a point cloud associable with the target motion trajectory; extend the target motion trajectory to a corresponding target trajectory point to obtain motion trajectory data; and determine position information of the target object in the target space based on the motion trajectory data.

The target detection process may include displaying the target detection page, prompting the target object to move, collecting detection information of the moving process of the target object, determining the position of the target object, displaying the position of the target object in the target detection page, etc.

The following detailed descriptions are respectively given. It should be noted that the order of the following embodiments is not taken as a limitation on the preferred order of the embodiments.

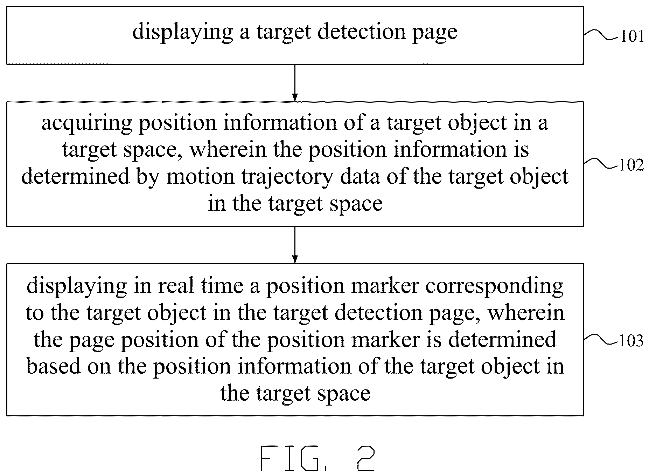

In the present disclosure embodiment, description is given from the angle of a target detection apparatus, which may be integrated in a computer device such as a terminal. Referring to FIG. 2, FIG. 2 is a flow chart diagram of steps of a target detection method provided by an embodiment of the present disclosure. When the processor of the terminal executes program instructions corresponding to the target detection method, the specific procedure is as follows, and the target detection method may be used in a device control method for target detection:

101. displaying a target detection page;

In the present disclosure embodiment, in order to accurately obtain position information of a target object in a target space, the monitoring range of the target space needs to be determined first. For example, in a smart home scenario, in order to record information for providing an automation control scheme for home appliances indoors, it is necessary to determine whether a user has reached the area where the home appliance is located. A radar detection device may first detect the position of the target object, and then report the position to a user side, so that the position of the target object is displayed in a target detection page of the user side, so as to subsequently record the time when the target object moves into the area within the range of the home automation control scheme, and at the same time realize automation control of home appliances in the smart home.

The above is only an example. The embodiments of the present disclosure may also be applied to target detection processes in spaces of other scenarios, such as home scenes, office places, indoor sports venues, indoor parking lots, etc. The listed examples are not limitations on implementing the solutions of the present disclosure.

It should be noted that a spatial area described in the present disclosure may be understood as an area configured in the target detection page for the target space.

The target detection page may be a content screen containing position information corresponding to the target object, and corresponds to the monitoring range of the target space, and is configured to display in real time positions of respective target objects in the target space. Illustratively, the target detection page may include a content display area, and the content display area may be configured to display the position of the target object.

Specifically, when a target application for detecting the target space is installed in the terminal, the target detection page may be entered through the target application, or the target detection page may be connected through a web page. At this time, a display interface of the terminal displays the target detection page, the target detection page corresponding to the monitoring range of the target space and being capable of displaying in real time positions of respective target objects in the target space, so that a user may view in real time positions of target objects in the target space from the terminal.

Through the above manner, the terminal may display the target detection page, so that the user may view positions of target objects in the target space through the target detection page.

102. acquiring position information of a target object in a target space, wherein the position information is determined by motion trajectory data of the target object in the target space;

In the present disclosure embodiment, after the target detection page in the terminal is turned on, the terminal acquires position information of the target object sent by a detection device. It is noted that the position information of the target object is determined by a motion trajectory of the target object in the target space.

Specifically, after a user opens the target detection page in the user terminal, the terminal acquires position information of the target object sent by the detection device through an information transmission channel established with the detection device. It is noted that each target object corresponds to one motion trajectory in the target space, and the position information of the target object is determined by the motion trajectory of the target object in the target space.

Illustratively, a target object A moves from a point a to a point b in the target space, and a motion trajectory appears in the process from a to b, an end point of the motion trajectory being the current position of the target object A, and the user terminal acquires position information of the target object A at b, including but not limited to coordinate values, speed values, etc. at b.

In some implementations, the position information is determined by motion trajectory data of the target object in the target space.

For example, step 102 may include:

The position information is determined by motion trajectory data of the target object in the target space, wherein the motion trajectory data is derived by using a point cloud of the target object in the target space to update historical motion trajectories associated with the point cloud.

Specifically, a detection device obtains point clouds in the target space based on radar measurement, laser measurement or photogrammetry principles, including three dimensional coordinates (XYZ), laser reflection intensity (Intensity) and color information (RGB). It is noted that a plurality of sampling points with spatial coordinates may be acquired on a surface of the target object, and a set of the sampling points is the point cloud of the target object. The detection device acquires point clouds in the target space at all times, and when the target object moves in the target space, changes of point clouds in each data frame corresponding to the target object construct a motion trajectory of the target object in the target space, and the detection device may determine position information of the target object in the target space through the motion trajectory of the target object.

Through the above manner, position information of the target object in the target space may be acquired, so that the position of the target object may be displayed in the target detection page.

103. displaying in real time a position marker corresponding to the target object in the target detection page, wherein the page position of the position marker is determined based on the position information of the target object in the target space;

In the present disclosure embodiment, in order to visualize the position of the target object, after acquiring the position information of the target object in the target space, the user terminal displays in real time in the target detection page the position marker corresponding to the target object, so as to visually show the user the position of the target object in the target space.

Specifically, after acquiring the position information of the target object sent by the detection device, the user terminal displays in real time in the target detection page the position marker corresponding to the target object. It is noted that the page position of the position marker corresponding to the target object is determined by the position information of the target object in the target space.

In some implementations, the target detection page contains a plurality of position markers, and each position marker corresponds to one target object.

For example, after step 103, the method may further include:

when position information of the target object in the target space is not acquired within a preset duration, deleting the position marker corresponding to the target object from the target detection page.

Specifically, the detection device detects position information of the target object in the target space at all times and sends the position information to the user terminal. When the target object leaves the target space, the detection device may not detect the position information of the target object in the target space and no longer sends the position information of the target object to the user terminal. When the user terminal does not receive the position information of the target object within a preset waiting duration, the terminal determines by default that the target object has left the target space and deletes the position marker of the target object that originally existed in the target detection page.

In some implementations, the target detection page may be composed of an information display page and a monitoring page, wherein the monitoring page includes a preset monitoring region for responding to an automation control scheme.

For example, the above target detection method may further include:

(103.A) acquiring an information display instruction for the monitoring region, wherein the information display instruction is triggered when any position marker first appears in the monitoring region or when all position markers have left the monitoring region;

(103.B) based on the information display instruction, displaying in the information display page time information when any position marker is in the monitoring region, and/or displaying an execution status of the automation control scheme.

The information display page may be an interface in the user terminal for displaying an execution status of an automation scheme in the monitoring region and time information of the target object in the monitoring region. If the target object triggers a corresponding automation control service in the monitoring region, the information display page records and displays a status of the automation control service and time information of the target object in the monitoring region.

The monitoring region may be a spatial area in the target space for setting an automation control scheme (the monitoring region may be a partial area of the target space or the entire target space), and the monitoring region may be configured to set an intelligent service of smart home, and the monitoring page in the target detection page may visualize the monitoring region.

Specifically, the target detection page is composed of the information display page and the monitoring page, the monitoring page is configured to display the position marker of the target object, and the information display page is configured to display information in the monitoring page. It is noted that a plurality of monitoring regions for setting automation control schemes may exist in the target space. When any one or more target objects move into a monitoring region in the target space, an automation control scheme in the monitoring region is triggered, and at the same time an information display instruction of the monitoring region is triggered, or when all target objects leave the monitoring region, the information display instruction of the monitoring region is also triggered. When the terminal detects the information display instruction, the terminal displays in the information display page time information when a position marker of any target object is in the monitoring region, and/or an execution status of the automation control scheme in the monitoring region.

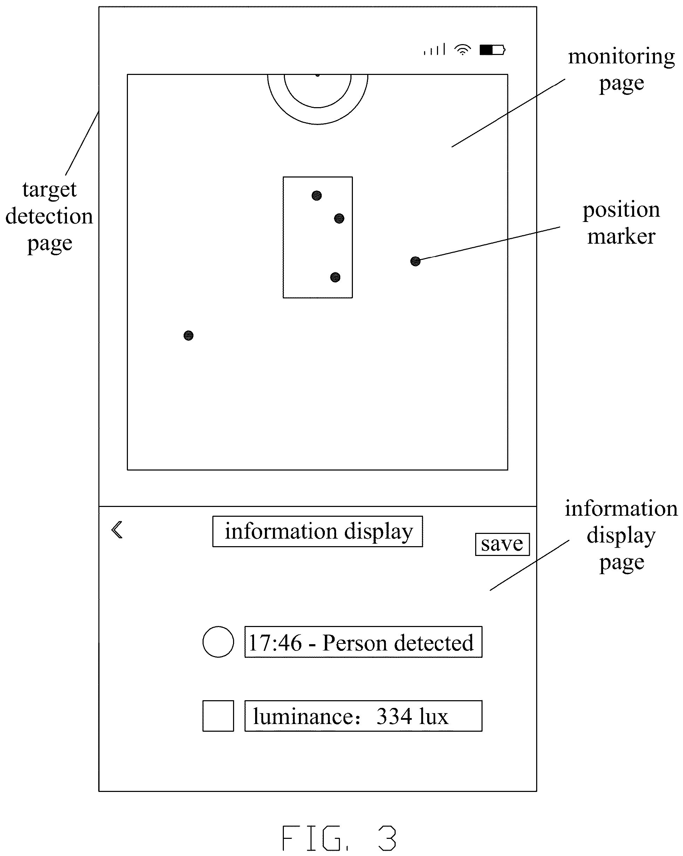

Illustratively, as shown in FIG. 3, the monitoring page in the target detection page has five position markers and one monitoring region A. Before 17:46, no person is in the monitoring region A, and no position marker exists in the monitoring page. At 17:46, any position marker enters the monitoring region A, and the information display page displays that a person is in the monitoring region A at 17:46 and displays a triggered lighting service status of the monitoring region A, i.e., an execution status of the automation control scheme.

Through the above manner, the terminal may, based on the position information of the target object in the target space, display in real time in the target detection page the position marker corresponding to the target object, so as to visually show the user the position of the target object in the target space.

By implementing any one or any combination of the above embodiments, the application scenario of the target detection process may be realized.

It may be seen that the embodiments of the present disclosure may: display a target detection page; acquire position information of a target object in a target space, wherein the position information is determined by motion trajectory data of the target object in the target space; and display in real time in the target detection page a position marker corresponding to the target object, wherein the page position of the position marker is determined based on the position information of the target object in the target space. Therefore, after the target detection page is displayed on the terminal, the position information of the target object in the target space is accurately determined based on the motion trajectory data of the target object, so as to avoid confusion of position information caused by too close distances among a plurality of target objects in the target space, and the position marker of the target object is displayed in real time in the target detection page based on the position information, so as to provide visual service for a user. In this way, the motion trajectory of the target object is updated based on point cloud data in the target space, so that the position information of each object is accurately acquired based on the motion trajectory, and the user experience is improved.

The method described in the above embodiments is further detailed below by way of example.

The embodiments of the present disclosure take data processing as an example to further describe the data processing method provided by the embodiments of the present disclosure.

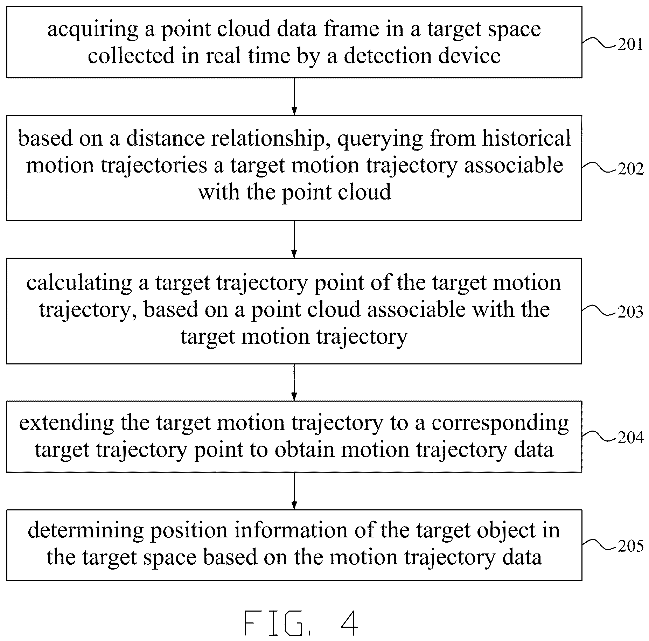

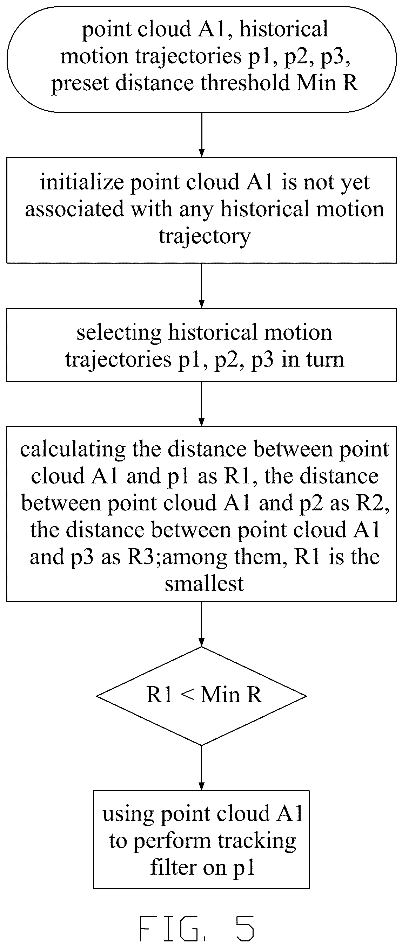

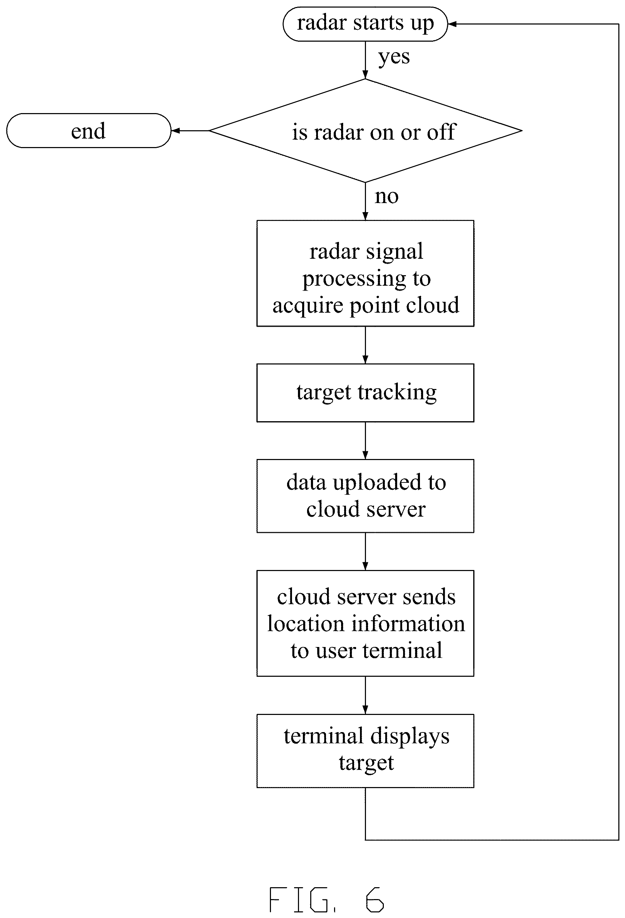

FIG. 4 is a flow chart diagram of further steps of the target detection method provided by an embodiment of the present disclosure, FIG. 5 is a flow schematic diagram of associating point clouds with motion trajectories provided by an embodiment of the present disclosure, and FIG. 6 is a flow schematic diagram of a radar device acquiring position information of a target object and transmitting the position information to a user terminal provided by an embodiment of the present disclosure. For ease of understanding, the embodiments of the present disclosure are described with reference to FIGS. 4-6.

In the embodiments of the present disclosure, description is given from the angle of a target detection apparatus, which may be integrated in a computer device such as a detection device, a terminal or a server. For example, when a processor of the computer device executes a program corresponding to the target detection method, the specific procedure of the target detection method is as follows:

201. acquiring a point cloud data frame in a target space collected in real time by a detection device;

In the present disclosure embodiment, in order to track in real time a motion trajectory of a target object in a target space, so as to obtain position information of the target object in the target space and implement an intelligent automatic control scenario for related devices or functional components, point cloud data frames in the target space may first be collected in real time by a detection device, so that a motion trajectory of the target object is subsequently determined based on point clouds in the point cloud data frames, and position detection of the target object is made more accurate.

The point cloud data frame may be a point cloud data map acquired by the detection device in the target space at every time frame, and the point cloud data frame contains at least one point cloud.

Specifically, a LiDAR device or other wireless signal detection device may scan the target space, acquire sampling points on surfaces of all objects in the target space, and cluster sampling points that are relatively close into corresponding point cloud data, i.e., the point cloud data frames corresponding to the target space collected in real time.

Through the above manner, point cloud data frames in the target space may be collected in real time by the detection device, so that a motion trajectory of the target object is subsequently determined based on point clouds in the point cloud data frames, and position detection of the target object is made more accurate.

202. based on a distance relationship, querying from historical motion trajectories a target motion trajectory associable with the point cloud, wherein the target motion trajectory is jointly constructed from the point cloud in one or more frames of historical point cloud data.

In the present disclosure embodiment, in order to accurately distinguish point clouds corresponding to the target object, so as to update a motion trajectory of the target object by using the point clouds and acquire position information of the target object in the target space, a target motion trajectory associable with the point cloud may be queried from historical motion trajectories based on distance relationships between the point cloud and the motion trajectories, so that the corresponding motion trajectory is updated by using the point cloud in the subsequent step, and the position information of the target object is accurately acquired.

The distance relationship may be a spatial relationship between the point cloud and respective historical motion trajectories, including but not limited to a Euclidean distance relationship, a Mahalanobis distance relationship, etc.

The historical motion trajectory may be a motion trajectory created and stored in the target space before a current time; the number of historical motion trajectories may be one or more. It may be understood that, if no point cloud in the target space is acquired or no motion trajectory is created before the current time, the number of historical motion trajectories at the current time is zero. The historical motion trajectory includes a motion trajectory of the target object and/or a motion trajectory of a false target.

specifically, a motion trajectory is jointly constructed from point clouds in one or more frames of historical point cloud data frames, each target object corresponds to one motion trajectory in the target space, and as long as the target object is in the target space, the motion trajectory corresponding to the target object always exists. After the acquired point cloud data frame of a current frame is obtained, since it may not be directly judged which historical motion trajectory the point cloud in the point cloud data frame is associated with, a spatial distance between each point cloud and each historical motion trajectory in the target space is calculated, and then the point cloud and the historical motion trajectory that are closest in distance are associated based on the distance relationship between the point cloud and the historical motion trajectory, so as to determine a target motion trajectory associated with the point cloud.

In some implementations, in addition to detecting a distance between the point cloud and the historical motion trajectory, the detection device further needs to compare the distance value between the point cloud and the historical motion trajectory with a preset distance threshold, so as to determine a target motion trajectory of the point cloud.

For example, step 202 may include:

(202.1) determining the distance relationship based on distance values between the point cloud and respective historical motion trajectories;

(202.2) when, based on the distance relationship, a historical motion trajectory whose distance value is smaller than a preset distance threshold is found, determining the historical motion trajectory having the smallest distance value as the target motion trajectory, and associating the point cloud with the target motion trajectory.

The preset distance threshold may be a minimum distance value at which the point cloud and the historical motion trajectory may establish an association relationship. If a distance between the point cloud and the historical motion trajectory is greater than the preset distance threshold, the point cloud and the historical motion trajectory may not establish an association.

Specifically, a point cloud data frame may contain a plurality of point clouds, and the number of historical motion trajectories may be one or more. After the point cloud data frame is acquired, a distance value between each point cloud in the point cloud data frame and each historical motion trajectory is calculated respectively. Specifically, a Mahalanobis distance value between the point cloud and the historical motion trajectory may be calculated. The calculation manner of the Mahalanobis distance value is specifically as follows:

$$\tilde{V}_{k+1}(\gamma) = \left[ \mathbf{Z}_c(k+1) - \mathbf{Z}_c(k+1|\ k) \right]' \mathbf{S}^{-1}(k+1) \left[ \mathbf{Z}_c(k+1) - \mathbf{Z}_c(k+1|\ k) \right]$$
$$= \mathbf{v}_c'(k+1)\mathbf{S}^{-1}(k+1)\mathbf{v}_c(k+1) \qquad ;$$

wherein a measurement value $\mathbf{Z}_c(k+1)$ is a candidate echo, $\mathbf{Z}_c(k+1|k)$ is a predicted value of the measurement, and $\mathbf{S}(k+1)$ is a covariance of an innovation $\mathbf{v}_c(k+1)$. For each point cloud, if a distance value between the point cloud and a historical motion trajectory is smaller than a preset distance threshold, it is indicated that a possible association relationship exists between the point cloud and the historical motion trajectory, and at this time, the historical motion trajectory having the smallest distance value with the point cloud is determined as a target motion trajectory of the point cloud.

Taking a radar device as an example of the detection device, since indoors are easily affected by factors such as placement of objects and facilities, walls and object movement, a signal propagation environment of the radar device indoors is much more complex than that outdoors, which results in that modeling of signal propagation of the radar device indoors may not be considered only from the angle of free signal propagation. In an indoor propagation environment, signals generate a multipath effect, and propagation delay, signal strength and characteristics of materials contacted by signal propagation of the multipath effect are greatly related, and meanwhile, indoor human activities and related factors all change actual conditions of signal propagation. In addition, generally, an indoor area is small, and target point cloud data loss caused by occlusion and insufficient angular resolution exists. Under the influence of many uncertain factors, it is extremely important to accurately complete motion trajectory tracking of a plurality of target objects in a target space. By simultaneously associating moving point clouds and static point clouds with corresponding motion trajectories, through a characteristic that the moving point clouds have fewer false targets and a characteristic that the static point clouds may detect subtle movements, accuracy of motion trajectory tracking is ensured. It is noted that, on one hand, in the present disclosure, the point cloud is directly associated with the historical motion trajectory, and compared with a manner of associating the point cloud with the historical motion trajectory after clustering the point cloud, when facing some relatively discrete point clouds, such point clouds are not ignored due to incapability of clustering, so that utilization rate of the point clouds is improved, and position information of the target object may be acquired more accurately; on the other hand, a method of directly associating the point cloud with the motion trajectory may solve problems such as incapability of measuring all target objects due to a temporary occlude and low angular resolution, and meanwhile, compared with a traditional association method of associating the point cloud with the historical motion trajectory after clustering the point cloud, the method of directly associating the point cloud with the historical motion trajectory may avoid a case that the detection device clusters point clouds of a plurality of target objects into one point cloud, and improves accuracy of motion trajectory tracking.

Illustratively, as shown in FIG. 5, a radar device detects a total of one point cloud A in a frame of point cloud data frame, and three historical motion trajectories p1, p2 and p3 exist in a target space, and a preset distance threshold is Min R. The point cloud A is not associated with any historical motion trajectory at the beginning, the historical motion trajectories p1, p2 and p3 are selected sequentially, distance values between the point cloud A and the historical motion trajectories p1, p2 and p3 are calculated to be R1, R2 and R3 respectively, and after calculation and comparison, R1 is the smallest, and then R1 is compared with the preset distance threshold Min R, and if R1<Min R, it is determined that the point cloud A is associated with the historical motion trajectory p1, and the historical motion trajectory p1 is subsequently tracked by using the point cloud A. If the radar device detects a total of a plurality of point clouds in a frame of point cloud data frame, the above procedure is performed for each point cloud to determine historical motion trajectories with which respective point clouds may be associated.

Through the above manner, a target motion trajectory associable with the point cloud may be queried from historical motion trajectories based on the distance relationship between the point cloud and the motion trajectory, so that the corresponding motion trajectory is updated by using the point cloud in the subsequent step, and the position information of the target object is accurately acquired.

203. calculating a target trajectory point of the target motion trajectory, based on a point cloud associable with the target motion trajectory;

In the present disclosure embodiment, in order to accurately update a position of a motion trajectory of the target object in the target space, after the point cloud is associated with a corresponding target historical motion trajectory, the point clouds associable with the target motion trajectory are configured to calculate a trajectory point of a current frame of the target motion trajectory, so that the target motion trajectory of the current frame is updated, so as to subsequently acquire position information of the target object based on the target motion trajectory of the target object.

Specifically, after the detection device associates point clouds in the point cloud data frame with corresponding historical motion trajectories based on spatial distance relationships and obtains target motion trajectories corresponding to the point clouds, position information and speed information of the point clouds are configured to calculate extension points of the target motion trajectories, i.e., trajectory points of the current frame of the target motion trajectories are calculated, including but not limited to coordinate positions and speed information of the trajectory points. Thereby, a movement direction of the motion trajectory of the target object may be accurately obtained by using the point clouds.

In some implementations, the detection device may calculate a first predicted trajectory point corresponding to a point cloud in a current point cloud data frame associable with the target motion trajectory based on a tracking filter algorithm, calculate a second predicted trajectory point based on a historical target trajectory point of a previous frame, and finally calculate the first predicted trajectory point and the second predicted trajectory point based on a preset weight ratio to obtain a target trajectory point of the target motion trajectory.

For example, step 203 may include:

> (203.1) calculating, through a tracking filter algorithm, a first predicted trajectory point corresponding to point clouds in a current point cloud data frame associable with the target motion trajectory;

(203.2) determining, from the target motion trajectory, a historical target trajectory point of a previous frame, and calculating, based on the historical target trajectory point, a second predicted trajectory point corresponding to the point cloud;

(203.3) calculating the first predicted trajectory point and the second predicted trajectory point based on a preset weight ratio to obtain a target trajectory point of the target motion trajectory.

The first predicted trajectory point may be a trajectory point predicted for the target motion trajectory associated with the current point cloud by the tracking filter algorithm.

The second predicted trajectory point may be a trajectory point of the current frame predicted based on coordinate information and speed information in the historical motion trajectory point of the previous frame.

Specifically, after the target motion trajectory determines the point cloud associated therewith, a tracking filter algorithm is adopted to perform coordinate prediction and speed prediction on respective sampling points in the point cloud acquired in the current frame, so as to obtain the first predicted trajectory point of the target motion trajectory, the first predicted trajectory point being a predicted position of the target object through the point cloud of the current frame; then, a historical target trajectory point acquired in the previous frame is acquired from the target motion trajectory, and based on the coordinate information and the speed information of the historical target trajectory point, a movement position of the target motion trajectory of the current frame is predicted, i.e., the second predicted trajectory point is obtained. After the first predicted trajectory point and the second predicted trajectory point are acquired, the first predicted trajectory point and the second trajectory point are calculated based on a preset weight ratio to obtain a target trajectory point of the target motion trajectory of the current frame. Specific tracking filtering includes the following steps:

1. One step prediction of an observed value of a state, wherein $F_k$ is a state transition matrix:

$$\hat{x}_{k|k-1} = F_k \hat{x}_{k-1|k-1} + B_k u_k$$

2. One step prediction of a covariance, wherein $Q_k$ is system noise:

$$P_{k|k-1} = cov(\hat{x}_{k|k-1}) = F_k P_{k-1|k-1} F_k^t + Q_k$$

3. Calculating an innovation covariance, wherein $H_k$ is an observation matrix and $R_k$ is observation noise:

$$S_k = H_k P_{k|k-1} H_k^t + R_k$$

4. Updating an observation noise covariance matrix $R_k$, the observation noise covariance matrix $R_k$ being a covariance matrix $\hat{R}_k$ calculated from point clouds associated with the trajectory and obtained by smoothing and filtering a previous observation matrix through an alpha filter.

$$R_k = \alpha \hat{R}_k + (1-\alpha) R_{k-1}$$

5. Calculating a Kalman filter gain:

$$K_k = P_{k|k-1}^T H_k^T S_k^{-1}$$

6. State updating, outputting an estimated value of Kalman filtering, wherein $y_k$ is a residual:

$$\hat{x}_{k|k} = \hat{x}_{k|k-1} + K_k y_k$$

7. Covariance updating, *I* being a unit matrix:

$$P_{k|k} = (I - K_k H_k) P_{k|k-1} (I - K_k H_k)^t + K_k R_k K_k^t$$ .

Illustratively, in a target space, a motion trajectory of a target object AA is tracked through point clouds, noise of the point clouds of the target object AA is removed by using a Kalman filter and prediction is performed, and coordinates (0,1,0) of a first predicted trajectory point of a target motion trajectory of the target object AA are obtained; the target motion trajectory of the target object AA is smoothed by using an alpha filter, and based on a historical target trajectory point of a previous frame of the target motion trajectory, coordinates (0,3,0) of a second predicted trajectory point of the current frame are predicted, and if a preset weight ratio is 1:1, based on the first predicted trajectory point and the second predicted trajectory point, coordinates (0,2,0) of a target trajectory point of the target motion trajectory of the current frame may be calculated.

Through the above manner, a trajectory point of the current frame of the target motion trajectory may be calculated by using the point cloud associated with the target motion trajectory, so that the target motion trajectory of the current frame is updated, and position information of the target object is subsequently acquired based on the target motion trajectory of the target object. Moreover, the observation noise covariance matrix is smoothed and filtered by using the alpha filter, so that the situation of maneuvering target tracking may be better adapted to in a target tracking process (for example, a person suddenly stops, suddenly turns, or suddenly walks in a reverse direction while walking).

204. extending the target motion trajectory to a corresponding target trajectory point, to obtain motion trajectory data;

In the present disclosure embodiment, in order to accurately acquire position information of the target object and better track the motion trajectory of the target object, the target motion trajectory may be extended to the corresponding target trajectory point to obtain motion trajectory data, so that the position information of the target object in the target space is accurately acquired.

The motion trajectory data may be position data of a current target object reflected by the motion trajectory, including but not limited to coordinate data, speed data, etc.

Specifically, after calculating a target trajectory point of a target motion trajectory of a target object, a detection device extends the target motion trajectory to a position of the target trajectory point to obtain a target motion trajectory of a current frame, and determines motion trajectory data of the target motion trajectory of the target object in the target space.

Through the above manner, the motion trajectory data may be obtained by extending the target motion trajectory to the corresponding target trajectory point, so that the position information of the target object in the target space is accurately acquired, and loss of the motion trajectory of the target object is prevented.

205. determining position information of the target object in the target space, based on the motion trajectory data;

In the present disclosure embodiment, in order to accurately acquire position information of the target object in the target space, motion trajectory data in a current motion trajectory of the target object may be configured to determine the position information of the target object in the target space, so that current position information of the target object is accurately acquired.

Specifically, after a target motion trajectory of the target object is determined based on a point cloud of the target object in a current point cloud data frame, coordinate information, speed information and the like of the target object in the target space are determined by using the motion trajectory data of the target motion trajectory, i.e., the position information of the target object in the target space is acquired.

In some implementations, after the detection device acquires the position information of the target object in the target space, the position information of the target object needs to be sent to a display terminal of a user terminal, so that the target detection page of the display terminal displays in real time a position marker of the target object, making the position of the target object in the target space visible.

For example, after step 205, the method may further include:

sending the position information to the display terminal, so that the display terminal displays in real time in the target detection page a position marker corresponding to the target object based on the position information.

Specifically, after detecting the position information of the target object in the target space, the detection device needs to send the position information of the target object to the terminal in real time, so that the terminal updates in real time the position marker of the target object in the target detection page of the display terminal, and visualizes the position of the target object in the target space.

Through the above manner, the position information of the target object in the target space may be determined by using the motion trajectory data in the current motion trajectory of the target object, so that current position information of the target object is accurately acquired.

In some implementations, if no historical motion trajectory exists in the target space at a current time, or a point cloud in a point cloud data frame may not be associated with any historical motion trajectory in the target space, a target data point cloud may be selected from the point clouds, and a target motion trajectory is created through the target point cloud and point clouds within a preset distance range of the target point cloud, so that a new associable motion trajectory is created for the point cloud. Specifically, the target detection method may further include:

(A.1) when, based on the distance relationship, no historical motion trajectory associable with the point cloud is found, determining, from a point cloud in the point cloud data frame that is not associated with historical motion trajectories, a target data point cloud that has a largest number of point clouds within a preset distance range thereof;
(A.2) creating a target motion trajectory based on the target data point cloud and the point clouds within the preset distance range thereof.

Specifically, after the detection device calculates distances between point clouds in the point cloud data frame and respective historical motion trajectories, if no association relationship may be established between the point clouds and all historical motion trajectories in the target space, it is indicated that the point clouds are highly likely to belong to a new target object newly appearing in the target space, and at this time, a target data point cloud needs to be determined from point clouds in the point cloud data frame that are not associated with historical motion trajectories in the target space, and the target data point cloud needs to be a point cloud having the largest number of point clouds within a preset distance range among point clouds that are not associated with historical motion trajectories in the target space, because the larger the number of point clouds within the preset distance range of the point cloud is, the more the point cloud may represent a real target object. Coordinate information, speed information and signal to noise ratio information of the target data point cloud and point clouds within the preset distance range thereof are acquired, a coordinate mean value, a speed mean value and a signal to noise ratio mean value are calculated to obtain a centroid, and the centroid is used as a starting point of a new motion trajectory to create a new motion trajectory, i.e., a new target motion trajectory is created based on the selected target data point cloud and point clouds within the preset distance range thereof.

In some implementations, the point cloud data frame includes moving point clouds acquired by a moving target detection scheme and static point clouds acquired by a static target detection scheme, and the characteristic that the moving point clouds have fewer false targets may be utilized to select the target data point cloud from the point cloud data frame, so that a subsequently created motion trajectory effectively suppresses false targets. For example, step (A.1) may include:

(A.1.1) selecting, from point clouds in the point cloud data frame that are not associated with historical motion trajectories, the moving point clouds;
(A.1.2) determining a first point cloud quantity corresponding to each moving point cloud, and identifying moving point clouds whose first point cloud quantity is greater than a preset moving point number threshold as candidate moving point clouds, wherein the first point cloud quantity is a number of moving point clouds within a preset range of the moving point clouds;
(A.1.3) determining a second point cloud quantity of each candidate moving point cloud, and identifying candidate moving point clouds whose second point cloud quantity is greater than a preset static point number threshold as pending data point clouds, wherein the second point cloud quantity is a number of static point clouds within the preset range of the candidate moving point clouds;
(A.1.4) determining a total point cloud quantity of each pending data point cloud, and identifying the pending data point cloud having the largest total point cloud quantity as the target data point cloud, wherein the total point cloud quantity is a sum of the first point cloud quantity and the second point cloud quantity.

The moving point clouds may be point clouds acquired by the moving target detection scheme in the point cloud data frame, and the static point clouds may be point clouds acquired by the static target detection scheme in the point cloud data frame.
Specifically, when no motion trajectory associable with the point clouds exists in the target space, a new motion trajectory needs to be created for the point clouds. In order to avoid negative effects brought by false point clouds, the characteristic that the moving point clouds have fewer false point clouds may be utilized to select the moving point clouds from point clouds in the point cloud data frame that are not associated with historical motion trajectories, and respective moving point cloud quantities within preset ranges of the moving point clouds are acquired, i.e., first point cloud quantities are acquired, and moving point clouds whose first point cloud quantities are greater than a preset moving point number threshold are identified as candidate moving point clouds, so that selected candidate moving point clouds have enough point clouds around to prove that the moving point clouds are real point clouds of the target object rather than point clouds of ghosts and other false targets. Then, respective candidate moving point clouds are used as centers to acquire numbers of static point clouds within preset ranges thereof, i.e., second point cloud quantities, and if the second point cloud quantities of the candidate moving point clouds are greater than a preset static point number threshold, the candidate moving point clouds may be directly considered as real moving point clouds rather than point clouds of ghosts and other false targets, and the candidate moving point clouds are identified as pending data point clouds. The first point cloud quantities and the second point cloud quantities of the pending data point clouds are added to obtain total point cloud quantities of the pending data point clouds, and the pending data point cloud having the largest total point cloud quantity is identified as the target data point cloud.

Through the above manner, the target data point cloud may be selected from the point clouds, and a new target motion trajectory is created through the target point cloud and point clouds within the preset distance range thereof, current position information of a new target object is determined based on the new target motion trajectory, and position information of the target object in the target space is better tracked subsequently. The new target motion trajectory created at the current time and/or the updated target motion trajectory serve as historical motion trajectories of a next point cloud data frame.

In some implementations, when a certain target object leaves the target space, a motion trajectory corresponding to the target object in the target space needs to be deleted, i.e., the motion trajectory of the target object no longer serves as a historical motion trajectory of a next frame.

In an implementation, a plurality of frames of point cloud data frames may be acquired within a preset time, and if the number of times the target motion trajectory is associated within the preset time and/or the frequency of being associated with moving point clouds does not satisfy a preset condition, it is determined by default that the target object corresponding to the target motion trajectory is no longer in the target space, and the target motion trajectory is deleted. Specifically, the target detection method may further include:

(B.1) within a preset time, acquiring a plurality of frames of point cloud data frames, and when detecting that the number of frames in which the target motion trajectory is associated within the preset time is smaller than a preset frame number threshold, deleting the target motion trajectory;

(B.2) and/or, when detecting that, within the preset time, the frequency at which the target motion trajectory is associated with moving point clouds in the point cloud data frame is smaller than a preset frequency threshold, deleting the target motion trajectory, wherein the point cloud data frame includes moving point clouds acquired by the moving target detection scheme and static point clouds acquired by the static target detection scheme.

Specifically, a plurality of frames of point cloud data frames are continuously acquired within the preset time. When the number of frames in which the target motion trajectory is associated (associated with moving point clouds or static point clouds) within the preset time is greater than a preset frame number value, it may be indicated that the target object corresponding to the target motion trajectory continuously exists in the target space within the preset time, so that a plurality of point cloud data frames associated with the target object are acquired; similarly, within a continuously detected preset time, if the frequency at which the target motion trajectory of the target object is associated with moving point clouds in the point cloud data frame is greater than a preset frequency threshold, it is also indicated that the target object exists in the target space within the preset time, so that moving point clouds of the target object are detected in the target space. Therefore, when it is detected that the number of frames in which the target motion trajectory is associated within the preset time is smaller than the preset frame number threshold, or the frequency at which the target motion trajectory is associated with moving point clouds in the point cloud data frame within the preset time is smaller than the preset frequency threshold, it is indicated that the target object corresponding to the target motion trajectory is no longer in the target space, so that point cloud information related to the target object cannot be detected in the target space, and at this time, the target motion trajectory corresponding to the target object in the target space needs to be deleted.

Through the above manner, a plurality of frames of point cloud data frames may be acquired within the preset time, and if the number of times the target motion trajectory is associated within the preset time and/or the frequency of being associated with moving point clouds does not satisfy the preset condition, it is determined by default that the target object corresponding to the target motion trajectory is no longer in the target space, and the target motion trajectory is deleted, so that information assistance is provided for subsequently synchronously deleting the position marker corresponding to the target object in the target detection page in the terminal, negative effects on visualization of the position of the target object are avoided, and a user may more accurately understand conditions in the target space.

To facilitate understanding of the embodiments of the present disclosure, an application scenario example of the embodiments of the present disclosure is described below. Specifically, the application scenario example is described by performing the above steps 201-203 and with reference to FIGS. 3-6.

An application scenario example of the embodiments of the present disclosure is applicable to target detection scenarios such as smart homes, parking lots, and indoor gyms. For ease of understanding, the embodiments of the present disclosure are described by taking a smart home scenario as an example, and the smart home target detection scenario is specifically as follows:

The user may view in real time, through the target detection page of the APP on the user terminal, a position marker of a target object in the target space, wherein the page position of the position marker is determined based on position information of the target object in the target space, the position information being determined by motion trajectory data of the target object in the target space; when any target object moves into a monitoring region within the target space where an automation control scheme is set, the information display page in the target detection page displays corresponding time information and the status of the automation control scheme; in this way, not only may the position information of the target object be accurately acquired by using the motion trajectory of the target object, but visual service for the target space is also provided to the user, improving user experience.

The smart home target detection scene of the present disclosure may be implemented by a user terminal and a detection device, with the specific procedure as follows:

(1) A target detection procedure of interface interaction of a user terminal is as follows:

(1.1) After a target detection application in the user terminal is opened, a target detection page is displayed, which may be regarded as an initial page. The target detection page includes an information display page and a monitoring page. The monitoring page includes a preset monitoring region for responding to an automation control scheme. If a target object appears in the target space, the monitoring page in the target detection page displays a position marker corresponding to the target object.
(1.2) When a position marker of any target object first appears in the monitoring region, or all position markers leave the monitoring region, an information display instruction of the information display page is triggered. As shown in FIG. 3, five position markers exist in the monitoring region, corresponding to five target objects in the target space. The information display page displays that a person is in the monitoring region at 17: 46, and a related automation control service is triggered, i.e., luminance is adjusted to 334 lux.

(2) Taking a radar device as an example of a detection device, and with reference to FIGS. 5 and 6, a position information detection procedure of a target object on the detection device side is as follows:

(2.1) As shown in FIG. 6, after the radar device is powered on, the radar device may collect in real time point cloud data frames in the target space, each point cloud data frame containing at least one point cloud, i.e., point cloud input is performed.
(2.2) If historical motion trajectories exist in the target space, distance values between point clouds in the point cloud data frame and the respective historical motion trajectories are calculated. As shown in FIG. 5, distance values R1, R2 and R3 between a point cloud A1 and historical motion trajectories p1, p2 and p3 are calculated respectively, wherein R1 is the smallest and satisfies R1<Min R, so that the point cloud A1 is associated with the historical motion trajectory p1, and the historical motion trajectory p1 is tracked by using the point cloud A1. It is noted that each historical motion trajectory corresponds to one target object, and the radar device may track the historical motion trajectory through the point cloud associated with the historical motion trajectory, acquire motion trajectory data of the historical motion trajectory, and obtain latest position information of the target object corresponding to the historical motion trajectory.
(2.3) If no historical motion trajectory exists in the target space, or point clouds in the point cloud data frame cannot be associated with any historical motion trajectory in the target space, a target data point cloud is selected from the point clouds, and a new target motion trajectory is created by using the target data point cloud and all point clouds within a preset range thereof. It is noted that the target data point cloud is a moving point cloud acquired by the moving target detection scheme in the point cloud data frame, and the target data point cloud has the largest number of point clouds within the preset range.
(2.4) The historical motion trajectory is tracked through the point cloud associated with the historical motion trajectory, a target trajectory point of the historical motion trajectory is predicted, the historical motion trajectory is extended to the target trajectory point, and motion trajectory data of a current frame is obtained.
(2.5) If the radar device detects that the target object leaves the target space, i.e., the motion trajectory of the target object in the target space is terminated, the motion trajectory is deleted.
(2.6) The radar device determines position information of the target object in the target space based on motion trajectory data of a motion trajectory corresponding to the target object in a current frame, and uploads the position information of the target object to a cloud server in real time, and the cloud server sends the position information of the target object to the user terminal, so that the user terminal displays position markers of respective target objects in the target detection page based on position information corresponding to the respective target objects.

Through the above application scenario example, the following effects may be achieved: positions of target objects in the target space are viewed in real time through the target detection page in the user terminal, a status of an automation control service triggered by the target object in a monitoring region in the target space is recorded and displayed, and time information of the target object in the monitoring region is displayed. Point clouds in the target space are detected by the radar device, and point clouds associated with the motion trajectory of the target object are configured to calculate current position information of the target object, so that accuracy of position detection of the target object is improved.

It may be known from the above that, in the embodiments of the present disclosure, , after the target detection page is displayed on the terminal, the position information of the target object in the target space is accurately determined based on the motion trajectory data of the target object, so as to avoid confusion of position information caused by too close distances among a plurality of target objects in the target space, and the position marker of the target object is displayed in real time in the target detection page based on the position information, so as to provide visual service for a user. In this way, the motion trajectory of the target object is updated based on point cloud data in the target space, so that the position information of each object is accurately acquired based on the motion trajectory, and the user experience is improved.

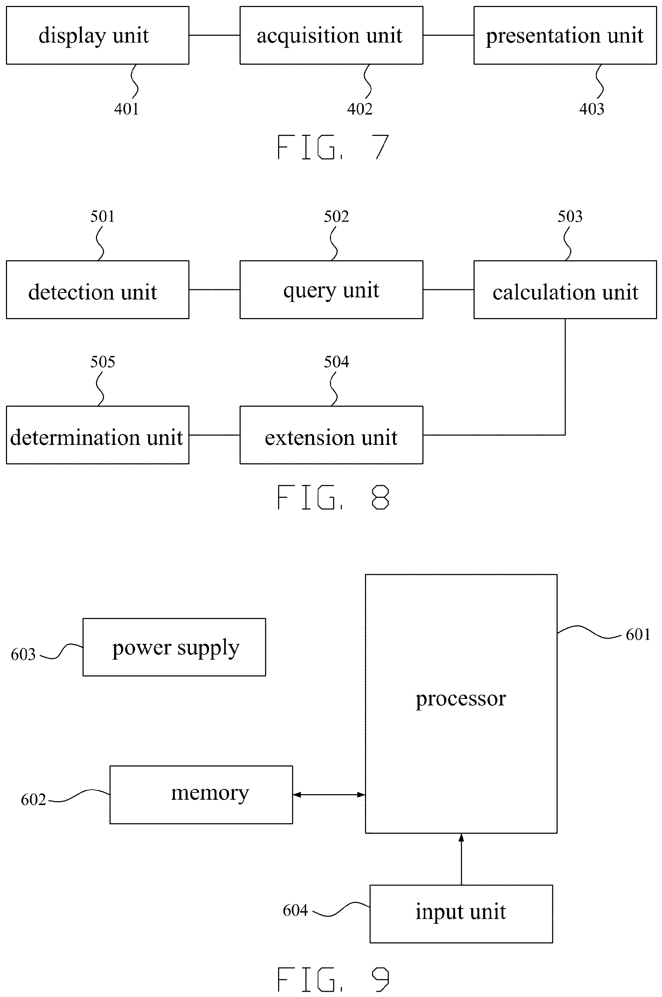

To better implement the above methods, an embodiment of the present disclosure further provides a target detection apparatus. For example, as shown in FIG. 7, the target detection apparatus may include a display unit 401, an acquisition unit 402 and a presentation unit 403.

The display unit 401 is configured to display a target detection page;

The acquisition unit 402 is configured to acquire position information of a target object in a target space, wherein the position information is determined by motion trajectory data of the target object in the target space;

The presentation unit 403 is configured to display in real time in the target detection page a position marker corresponding to the target object, wherein the page position of the position marker is determined based on the position information of the target object in the target space.

In some implementations, the acquisition unit 402 is further configured to: determine the position information by motion trajectory data of the target object in the target space, wherein the motion trajectory data is derived by using a point cloud of the target object in the target space to update historical motion trajectories associated with the point cloud.

In some implementations, the target detection page contains a plurality of position markers, each position marker corresponds to one target object, and the target detection apparatus further includes a deletion unit configured to: when position information of the target object in the target space is not acquired within a preset duration, delete the position marker corresponding to the target object from the target detection page.

In some implementations, the target detection page includes an information display page and a monitoring page, the monitoring page includes a monitoring region for responding to an automation control scheme, and the target detection apparatus further includes a trigger unit configured to: acquire an information display instruction for the monitoring region, wherein the information display instruction is triggered when any position marker first appears in the monitoring region or when all position markers have left the monitoring region; and based on the information display instruction, display in the information display page time information when any position marker is in the monitoring region, and/or display an execution status of the automation control scheme.

It may be known from the above that, in the embodiments of the present disclosure, a position marker of a target object in a target space may be viewed in real time through the target detection page in the user terminal, a status of an automation control service triggered by the target object in a monitoring region in the target space is recorded and displayed, and time information of the target object in the monitoring region is displayed. Point clouds in the target space are detected, and point clouds associated with motion trajectories of the target object are configured to calculate current position information of the target object, so that accuracy of position detection of the target object is improved, and user experience is improved.

To better implement the above methods, an embodiment of the present disclosure further provides a target detection apparatus. For example, as shown in FIG. 8, the target detection apparatus may include a detection unit 501, a query unit 502, a calculation unit 503, an extension unit 504 and a determination unit 505.

The detection unit 501 is configured to acquire point cloud data frames in a target space collected in real time by a detection device, the point cloud data frames comprising at least one point cloud;

The query unit 502 is configured to, based on distance relationships, query from historical motion trajectories a target motion trajectory associable with the point cloud, wherein the target motion trajectory is jointly constructed from point clouds in one or more frames of historical point cloud data frames;

The calculation unit 503 is configured to calculate a target trajectory point of the target motion trajectory by using point clouds associable with the target motion trajectory;

The extension unit 504 is configured to extend the target motion trajectory to a corresponding target trajectory point to obtain motion trajectory data;

The determination unit 505 is configured to determine position information of the target object in the target space based on the motion trajectory data.

In some implementations, the query unit 502 is further configured to: determine the distance relationships based on distance values between the point cloud and respective historical motion trajectories; and when a historical motion trajectory whose distance value is smaller than a preset distance threshold is found based on the distance relationships, determine the historical motion trajectory having the smallest distance value as the target motion trajectory, and associate the point cloud with the target motion trajectory.

In some implementations, the target detection apparatus further includes a creation unit configured to: when no historical motion trajectory associable with the point cloud is found based on the distance relationship, determine, from point clouds in the point cloud data frame that are not associated with historical motion trajectories, a target data point cloud that has a largest number of point clouds within a preset distance range thereof; and create a target motion trajectory based on the target data point cloud and point clouds within the preset distance range thereof.

In some implementations, the point cloud data frame includes moving point clouds acquired by a moving target detection scheme and static point clouds acquired by a static target detection scheme, and the creation unit is further configured to: select, from point clouds in the point cloud data frame that are not associated with historical motion trajectories, the moving point clouds; determine a first point cloud quantity corresponding to each moving point cloud, and identify moving point clouds whose first point cloud quantity is greater than a preset moving point number threshold as candidate moving point clouds, wherein the first point cloud quantity is a number of moving point clouds within a preset range of the moving point clouds; determine a second point cloud quantity of each candidate moving point cloud, and identify candidate moving point clouds whose second point cloud quantity is greater than a preset static point number threshold as pending data point clouds, wherein the second point cloud quantity is a number of static point clouds within the preset range of the candidate moving point clouds; determine a total point cloud quantity of each pending data point cloud, and identify the pending data point cloud having the largest total point cloud quantity as the target data point cloud, wherein the total point cloud quantity is a sum of the first point cloud quantity and the second point cloud quantity.

In some implementations, the calculation unit 503 is further configured to: calculate, through a tracking filter algorithm, a first predicted trajectory point corresponding to point clouds in a current point cloud data frame associable with the target motion trajectory; determine, from the target motion trajectory, a historical target trajectory point of a previous frame, and calculate, based on the historical target trajectory point, a second predicted trajectory point corresponding to the point cloud; and calculate the first predicted trajectory point and the second predicted trajectory point based on a preset weight ratio to obtain a target trajectory point of the target motion trajectory.

In some implementations, the target detection apparatus further includes a judgment unit configured to: within a preset time, acquire a plurality of frames of point cloud data frames, and when detecting that the number of frames in which the target motion trajectory is associated within the preset time is smaller than a preset frame number threshold, delete the target motion trajectory; and/or, when detecting that, within the preset time, the frequency at which the target motion trajectory is associated with moving point clouds in the point cloud data frame is smaller than a preset frequency threshold, delete the target motion trajectory, wherein the point cloud data frame includes moving point clouds acquired by a moving target detection scheme and static point clouds acquired by a static target detection scheme.

In some implementations, the target detection apparatus further includes a sending unit configured to: send the position information to a display terminal, so that the display terminal displays in real time in the target detection page a position marker corresponding to the target object based on the position information.

It may be known from the above that, in the embodiments of the present disclosure, after the target detection page is displayed on the user terminal, the position information of the target object in the target space is accurately determined based on the motion trajectory data of the target object, so as to avoid confusion of position information caused by too close distances among a plurality of target objects in the target space, and the position marker of the target object is displayed in real time in the target detection page based on the position information, so as to provide visual service for a user. In this way, the motion trajectory of the target object is updated based on point cloud data in the target space, so that the position information of each object is accurately acquired based on the motion trajectory, and the user experience is improved.

An embodiment of the present disclosure further provides a computer device. As shown in FIG. 9, FIG. 9 shows a structural schematic diagram of the computer device involved in the embodiments of the present disclosure. Specifically:

The computer device may include components such as a processor 601 having one or more processing cores, a memory 602 having one or more computer readable storage media, a power supply 603, and an input unit 604. A person skilled in the art may understand that the structure of the computer device shown in FIG. 9 does not constitute a limitation on the computer device, and the computer device may include more or fewer components than those shown in the figure, or combine some components, or have different component arrangements. Wherein:

The processor 601 is a control center of the computer device, and connects all parts of the entire computer device by using various interfaces and lines. The processor 601 performs various functions of the computer device and processes data by running or executing software programs and/or modules stored in the memory 602 and calling data stored in the memory 602. Optionally, the processor 601 may include one or more processing cores. The processor 601 may integrate an application processor and a modem processor, wherein the application processor mainly processes an operating system, a user interface, application programs, etc., and the modem processor mainly processes wireless communication. It may be understood that the above modem processor may not be integrated into the processor 601.

The memory 602 may be configured to store software programs and modules. The processor 601 performs various function applications and data processing by running the software programs and modules stored in the memory 602. The memory 602 may mainly include a program storage area and a data storage area, wherein the program storage area may store an operating system, application programs required by at least one function (such as a sound playing function and an image playing function), etc., and the data storage area may store data created based on use of the computer device, etc. In addition, the memory 602 may include a high speed random access memory, and may further include a nonvolatile memory, for example, at least one disk storage device, a flash memory device or other volatile solid state storage devices. Correspondingly, the memory 602 may further include a memory controller to provide the processor 601 with access to the memory 602.

The computer device further includes the power supply 603 configured to supply power to respective components. Preferably, the power supply 603 may be logically connected to the processor 601 through a power management system, so that functions such as charge management, discharge management and power consumption management are implemented through the power management system. The power supply 603 may further include one or more direct current or alternating current power supplies, a recharging system, a power supply fault detection circuit, a power supply converter or an inverter, a power supply state indicator, and any other component.

The computer device may further include the input unit 604. The input unit 604 may be configured to receive input digital or character information, and generate keyboard, mouse, joystick, optical or trackball signal inputs related to user settings and function control.

Although not shown, the computer device may further include a display unit, etc., which is not described herein again. Specifically, in the embodiments of the present disclosure, the processor 601 in the computer device loads executable files corresponding to processes of one or more application programs into the memory 602 based on the following instructions, and runs application programs stored in the memory 602 by the processor 601, so as to implement various functions, as follows:

displaying a target detection page; acquiring position information of a target object in a target space, wherein the position information is determined by motion trajectory data of the target object in the target space; and displaying in real time in the target detection page a position marker corresponding to the target object, wherein the page position of the position marker is determined based on the position information of the target object in the target space.

or acquiring point cloud data frames in a target space collected in real time by a detection device, the point cloud data frames comprising at least one point cloud; based on distance relationships, querying from historical motion trajectories a target motion trajectory associable with the point cloud, wherein the target motion trajectory is jointly constructed from point clouds in one or more frames of historical point cloud data frames; calculating a target trajectory point of the target motion trajectory by using point clouds associable with the target motion trajectory; extending the target motion trajectory to a corresponding target trajectory point to obtain motion trajectory data; and determining position information of the target object in the target space based on the motion trajectory data.

Specific implementations of the above operations may refer to the foregoing embodiments, which are not described herein again.

It may be known from the above that, in the present solution, after the target detection page is displayed on the user terminal, the position information of the target object in the target space is accurately determined based on the motion trajectory data of the target object, so as to avoid confusion of position information caused by too close distances among a plurality of target objects in the target space, and the position marker of the target object is displayed in real time in the target detection page based on the position information, so as to provide visual service for a user. In this way, the motion trajectory of the target object is updated based on point cloud data in the target space, so that the position information of each object is accurately acquired based on the motion trajectory, and the user experience is improved.

A person of ordinary skill in the art may understand that all or part of steps in the various methods of the above embodiments may be completed by instructing relevant hardware through an instruction. The instruction may be stored in a computer readable storage medium and loaded and executed by a processor.

In an embodiment, the present disclosure provides a computer program product or computer program. The computer program product or computer program includes computer instructions, and the computer instructions are stored in a computer readable storage medium. A processor of a computer device reads the computer instructions from the computer readable storage medium, and the processor executes the computer instructions, so that the computer device executes steps in the above method embodiments.

In an embodiment, the present disclosure provides a computer readable storage medium. Computer readable instructions are stored on the computer readable storage medium. When the computer readable instructions are executed by a processor, steps in the above method embodiments are implemented. For specific limitations on the steps, reference may be made to limitations on the target detection method in the method embodiments, which are not described herein again.

A person of ordinary skill in the art may understand that all or part of the procedures in the methods of the above embodiments may be completed by a computer program instructing relevant hardware. The computer program may be stored in a nonvolatile computer readable storage medium. When the computer program is executed, the procedures of the embodiments of the above methods may be included. Wherein, any reference to a memory, storage, database or other medium used in the embodiments provided by the present disclosure may include a nonvolatile memory and/or a volatile memory. The nonvolatile memory may include a read only memory (ROM), a programmable ROM (PROM), an electrically programmable ROM (EPROM), an electrically erasable programmable ROM (EEPROM) or a flash memory. The volatile memory may include a random access memory (RAM) or an external high speed cache. As illustrative rather than limiting, RAM may be obtained in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a memory bus (Rambus) direct RAM (RDRAM), a direct memory bus dynamic RAM (DRDRAM), and a memory bus dynamic RAM (RDRAM), etc.

The technical features of the above embodiments may be combined arbitrarily. For concise description, not all possible combinations of the technical features in the above embodiments are described. However, as long as there is no contradiction in the combinations of the technical features, the combinations should be considered as the scope described in the present specification.

The above embodiments only express several implementation manners of the present disclosure, and the description is specific and detailed, but should not be construed as a limitation on the patent scope of the present disclosure. It should be noted that, for a person of ordinary skill in the art, several variations and improvements may be made without departing from the concept of the present disclosure, and these all fall within the protection scope of the present disclosure. Therefore, the protection scope of the patent of the present disclosure shall be subject to the appended claims.

## Claims

1. A target detection method, performed by a computer device, the method comprises:

   displaying a target detection page;
   acquiring position information of a target object in a target space, wherein the position information is determined by motion trajectory data of the target object in the target space;
   displaying in real time a position marker corresponding to the target object in the target detection page, wherein a page position of the position marker is determined based on the position information of the target object in the target space.

2. The method of claim 1, wherein the position information is determined by the motion trajectory data of the target object in the target space, comprises:

   the position information is determined by the motion trajectory data of the target object in the target space, wherein the motion trajectory data is derived by using a point cloud of the target object in the target space, to update historical motion trajectories associated with the point cloud.

3. The method of claim 1, wherein the target detection page comprises a plurality of position markers, and each position marker corresponds to one of target objects, after displaying in real time the position marker corresponding to the target object in the target detection page, the method further comprises:
   when the position information of the target object in the target space is not acquired within a preset duration, deleting the position marker corresponding to the target object from the target detection page.

4. The method of any one of claims **1 to 3,** wherein the target detection page comprises an information display page and a monitoring page, and the monitoring page comprises a preset monitoring region for responding to an automation control scheme, the method further comprises:

   acquiring an information display instruction for the monitoring region, wherein the information display instruction is triggered when any position marker first appears in the monitoring region, or when all position markers have left the monitoring region;
   based on the information display instruction, displaying time information when any position marker is in the monitoring region, and/or displaying an execution status of the automation control scheme in the information display page.

5. A target detection method, performed by a computer device, the method comprises:

acquiring a point cloud data frame in a target space collected in real time by a detection device, wherein the point cloud data frame comprises at least one point cloud;

based on a distance relationship, querying from historical motion trajectories a target motion trajectory associable with the point cloud, wherein the target motion trajectory is jointly constructed from the point cloud in one or more frames of historical point cloud data;

based on the point cloud associable with the target motion trajectory, calculating a target trajectory point of the target motion trajectory;

extending the target motion trajectory to the corresponding target trajectory point, to obtain motion trajectory data;

based on the motion trajectory data, determining position information of the target object in the target space.

6. The method of claim **5,** wherein based on the distance relationship, querying from historical motion trajectories the target motion trajectory associable with the point cloud, comprises:

determining the distance relationship based on distance values between the point cloud and respective historical motion trajectories;

when, based on the distance relationship, a historical motion trajectory whose distance value is smaller than a preset distance threshold is found, determining the historical motion trajectory having the smallest distance value as the target motion trajectory, and associating the point cloud with the target motion trajectory.

7. The method of claim 5, wherein the method further comprises:

when, based on the distance relationship, no historical motion trajectory associable with the point cloud is found, determining, from a point cloud in the point cloud data frame that is not associated with historical motion trajectories, a target data point cloud that has a largest number of point clouds within a preset distance range thereof;

creating the target motion trajectory based on the target data point cloud and the point clouds within the preset distance range thereof.

8. The method of claim **7,** wherein the point cloud data frame comprises moving point clouds acquired by a moving target detection scheme and static point clouds acquired by a static target detection scheme, and wherein determining, from the point cloud in the point cloud data frame that is not associated with the historical motion trajectories, the target data point cloud, comprises:

selecting, from point clouds in the point cloud data frame that are not associated with historical motion trajectories, the moving point clouds;

determining a first point cloud quantity for each moving point cloud, and identifying moving point clouds whose first point cloud quantity is greater than a preset moving point number threshold as candidate moving point clouds, wherein the first point cloud quantity is a number of moving point clouds within a preset range of the moving point clouds;

determining a second point cloud quantity for each candidate moving point cloud, and identifying candidate moving point clouds whose second point cloud quantity is greater than a preset static point number threshold as pending data point clouds, wherein the second point cloud quantity is a number of static point clouds within the preset range of the candidate moving point clouds;

determining a total point cloud quantity for each pending data point cloud, and identifying the pending data point cloud having the largest total point cloud quantity as the target data point cloud, wherein the total point cloud quantity is a sum of the first point cloud quantity and the second point cloud quantity.

9. The method of any one of claims **5** to **8,** wherein based on the point cloud associable with the target motion trajectory, calculating the target trajectory point of the target motion trajectory, comprises:

calculating, through a tracking filter algorithm, a first predicted trajectory point corresponding to the point cloud in a current point cloud data frame associable with the target motion trajectory;

determining, from the target motion trajectory, a historical target trajectory point of a previous frame, and calculating, based on the historical target trajectory point, a second predicted trajectory point corresponding to the point cloud;

calculating, based on a preset weight ratio, the first predicted trajectory point and the second predicted trajectory point to obtain the target trajectory point of the target motion trajectory.

10. The method of any one of claims 5 to **8,** wherein the method further comprises:

within a preset time period, acquiring a plurality of the point cloud data frames, and when detecting a number of frames in which the target motion trajectory is associated is smaller than a preset frame number threshold, deleting the target motion trajectory;
and/or, when detecting, within the preset time period, a frequency at which the target motion trajectory is associated with moving point clouds in the point cloud data frame, is smaller than a preset frequency threshold, deleting the target motion trajectory, wherein the point cloud data frame comprises the moving point clouds acquired by a moving target detection scheme and static point clouds acquired by a static target detection scheme.

11. The method of any one of claims **5** to **8,** wherein after based on the motion trajectory data, determining position information of the target object in the target space, the method further comprises:
sending the position information to a display terminal, so that the display terminal, based on the position information, displays in real time in a target detection page a position marker corresponding to the target object.

12. A target detection apparatus, wherein the target detection apparatus comprises:

a display unit, configured to display a target detection page;
an acquisition unit, configured to acquire position information of a target object in a target space, wherein the position information is determined by motion trajectory data of the target object in the target space;
a presentation unit, configured to display in real time a position marker corresponding to the target object in the target detection page, wherein a page position of the position marker is determined based on the position information of the target object in the target space.

13. The apparatus of claim **12,** wherein the target detection page comprises a plurality of position markers, and each position marker corresponds to one of target objects, the target detection apparatus further comprises deletion unit, configured to:
when the position information of the target object in the target space is not acquired within a preset duration, delete the position marker corresponding to the target object from the target detection page.

14. The apparatus of claims **12** or **13,** wherein the target detection page comprises an information display page and a monitoring page, and the monitoring page comprises a pre-set monitoring region for responding to an automation control scheme, the apparatus further comprises a trigger unit, configured to:

acquire an information display instruction for the monitoring region, wherein the information display instruction is triggered when any position marker first appears in the monitoring region, or when all position markers have left the monitoring region;
based on the information display instruction, display time information when any position marker is in the monitoring region, and/or displaying an execution status of the automation control scheme in the information display page.

15. A target detection apparatus, wherein the target detection apparatus comprises:

a detection unit, configured to acquire a point cloud data frame in a target space collected in real time by a detection device, wherein the point cloud data frame comprises at least one point cloud;
a query unit, configured to query from historical motion trajectories a target motion trajectory associable with the point cloud, based on a distance relationship, wherein the target motion trajectory is jointly constructed from the point cloud in one or more frames of historical point cloud data;
a calculation unit, configured to calculate a target trajectory point of the target motion trajectory, based on the point cloud associable with the target motion trajectory;
an extension unit, configured to extend the target motion trajectory to the corresponding target trajectory point, to obtain motion trajectory data;
a determination unit, configured to determine position information of the target object in the target space, based on the motion trajectory data.

**16.** The apparatus of claim 15, wherein the query unit further is configured to determine the distance relationship based on distance values between the point cloud and respective historical motion trajectories;
when, according to the distance relationship, a historical motion trajectory whose distance value is smaller than a preset distance threshold is found, determine the historical motion trajectory having the smallest distance value as the target motion trajectory, and associating the point cloud with the target motion trajectory.

**17.** The apparatus of claim 15, wherein the target detection apparatus further comprises creation unit, configured to:
when, according to the distance relationship, no historical motion trajectory associable with the point cloud is found, determining, from a point cloud in the point cloud data frame that is not associated with historical motion trajectories, a target data point cloud that has a largest number of point clouds within a preset distance range thereof; create the target motion trajectory according tothe target data point cloud and the point clouds within the preset distance range thereof.

**18.** A computer device, comprising a memory and a processor, wherein the memory stores instructions which, when executed by the processor, cause the processor to carry out the method according to any one of claims **1** to **11.**

**19.** A computer readable storage medium, wherein computer readable instructions stored on the computer readable storage medium cause a processor to perform the steps of the method according to any one of claims **1** to **11** when executed.

**20.** A computer program product comprising computer-readable instructions that, when executed by a processor, cause the processor to carry out the method according to any one of claims **1** to **11.**

displaying a target detection page

acquiring position information of a target object in a target space, wherein the position information is determined by motion trajectory data of the target object in the target space

displaying in real time a position marker corresponding to the target object in the target detection page, wherein a page position of the position marker is determined based on the position information of the target object in the target space

detection device

and/or

server

position of the target object determined based on the detection information

treminal

FIG. 1

| displaying a target detection page | ∿101 |

↓

| acquiring position information of a target object in a target space, wherein the position information is determined by motion trajectory data of the target object in the target space | ∿102 |

↓

| displaying in real time a position marker corresponding to the target object in the target detection page, wherein the page position of the position marker is determined based on the position information of the target object in the target space | ∿103 |

FIG. 2

monitoring
page

target
detection
page

position
marker

information display    save

information
display
page

17:46 - Person detected

luminance: 334 lux

FIG. 3

acquiring a point cloud data frame in a target space collected in real time by a detection device ⟋~201

↓

based on a distance relationship, querying from historical motion trajectories a target motion trajectory associable with the point cloud ⟋~202

↓

calculating a target trajectory point of the target motion trajectory, based on a point cloud associable with the target motion trajectory ⟋~203

↓

extending the target motion trajectory to a corresponding target trajectory point to obtain motion trajectory data ⟋~204

↓

determining position information of the target object in the target space based on the motion trajectory data ⟋~205

FIG. 4

point cloud A1, historical
motion trajectories p1, p2, p3,
preset distance threshold Min R

initialize point cloud A1 is not yet
associated with any historical motion
trajectory

selecting historical motion
trajectories p1, p2, p3 in turn

calculating the distance between point
cloud A1 and p1 as R1, the distance
between point cloud A1 and p2 as R2,
the distance between point cloud A1
and p3 as R3;among them, R1 is the
smallest

R1 < Min R

using point cloud A1
to perform tracking
filter on p1

FIG. 5

```
                    ┌─────────────────┐
              ┌────►│  radar starts up │◄──────────────┐
              │     └─────────────────┘                │
              │             │ yes                       │
              │             ▼                           │
        ┌─────────┐    ╱─────────────╲                  │
        │   end   │◄──◄ is radar on or off              │
        └─────────┘    ╲─────────────╱                  │
                            │ no                        │
                            ▼                           │
              ┌──────────────────────────┐             │
              │      radar signal          │             │
              │    processing to           │             │
              │  acquire point cloud       │             │
              └──────────────────────────┘             │
                            │                           │
                            ▼                           │
              ┌──────────────────────────┐             │
              │      target tracking       │             │
              └──────────────────────────┘             │
                            │                           │
                            ▼                           │
              ┌──────────────────────────┐             │
              │      data uploaded to      │             │
              │      cloud server          │             │
              └──────────────────────────┘             │
                            │                           │
                            ▼                           │
              ┌──────────────────────────┐             │
              │   cloud server sends       │             │
              │  location information      │             │
              │   to user terminal         │             │
              └──────────────────────────┘             │
                            │                           │
                            ▼                           │
              ┌──────────────────────────┐             │
              │   terminal displays        │             │
              │        target              │             │
              └──────────────────────────┘             │
                            │                           │
                            └───────────────────────────┘
```

FIG. 6

| display unit | — | acquisition unit | — | presentation unit |
|:---:|:---:|:---:|:---:|:---:|
| 401 | | 402 | | 403 |

FIG. 7

| 501 | | 502 | | 503 |
|:---:|:---:|:---:|:---:|:---:|
| detection unit | — | query unit | — | calculation unit |

| 505 | | 504 | |
|:---:|:---:|:---:|:---:|
| determination unit | — | extension unit | |

FIG. 8

603 — power supply

601 — processor

602 — memory

604 — input unit

FIG. 9

## INTERNATIONAL SEARCH REPORT

| International application No. |
|---|
| **PCT/CN2024/084617** |

**A. CLASSIFICATION OF SUBJECT MATTER**

G06T7/70(2017.01)i

According to International Patent Classification (IPC) or to both national classification and IPC

**B. FIELDS SEARCHED**

Minimum documentation searched (classification system followed by classification symbols)

IPC: G06T、G06V20/-、G01S

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 多, 目标, 对象, 检测, 监视, 点云, 位置, 轨迹, 关联, 匹配, 距离, multi, target, object, detect, monitor, point cloud, location, position, track, relevance, correlation, match, distance

**C. DOCUMENTS CONSIDERED TO BE RELEVANT**

| Category* | Citation of document, with indication, where appropriate, of the relevant passages | Relevant to claim No. |
|---|---|---|
| PX | CN 117078987 A (SHENZHEN LUMI UNITED TECHNOLOGY CO., LTD.) 17 November 2023 (2023-11-17) description, paragraphs 40-174 | 5-7, 9-11, 15-20 |
| PY | CN 116894866 A (SHENZHEN LUMI UNITED TECHNOLOGY CO., LTD.) 17 October 2023 (2023-10-17) description, paragraphs 56-199 | 1-4, 12-14, 18-20 |
| PY | CN 117078987 A (SHENZHEN LUMI UNITED TECHNOLOGY CO., LTD.) 17 November 2023 (2023-11-17) description, paragraphs 40-174 | 1-4, 12-14, 18-20 |
| X | US 2022137207 A1 (ARGO AI, LLC) 05 May 2022 (2022-05-05) description, paragraphs 31-93 | 5-7, 9-11, 15-20 |
| Y | CN 113870390 A (SHENZHEN LUMI UNITED TECHNOLOGY CO., LTD.) 31 December 2021 (2021-12-31) description, paragraphs 55-186 | 1-4, 12-14, 18-20 |
| Y | US 2022137207 A1 (ARGO AI, LLC) 05 May 2022 (2022-05-05) description, paragraphs 31-93 | 1-4, 12-14, 18-20 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 June 2024** | **26 June 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/CN2024/084617**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | CN 115542308 A (DEXIN INTELLIGENT TECHNOLOGY (CHANGZHOU) CO., LTD.) 30 December 2022 (2022-12-30)<br>          description, paragraphs 35-82 | 1-7, 9-20 |
| Y | CN 115205891 A (BEIJING UNIVERSITY OF POSTS AND TELECOMMUNICATIONS) 18 October 2022 (2022-10-18)<br>          description, paragraphs 46-97 | 1-7, 9-20 |
| A | CN 115390468 A (SHENZHEN LUMI UNITED TECHNOLOGY CO., LTD.) 25 November 2022 (2022-11-25)<br>          entire document | 1-20 |

Form PCT/ISA/210 (second sheet) (July 2022)

**INTERNATIONAL SEARCH REPORT**
Information on patent family members

International application No.

**PCT/CN2024/084617**

| Patent document cited in search report | | | Publication date (day/month/year) | Patent family member(s) | | | Publication date (day/month/year) |
|---|---|---|---|---|---|---|---|
| CN | 117078987 | A | 17 November 2023 | None | | | |
| CN | 116894866 | A | 17 October 2023 | None | | | |
| US | 2022137207 | A1 | 05 May 2022 | WO | 2022098516 | A1 | 12 May 2022 |
| | | | | DE | 112021005806 | T5 | 24 August 2023 |
| | | | | US | 11693110 | B2 | 04 July 2023 |
| CN | 113870390 | A | 31 December 2021 | None | | | |
| CN | 115542308 | A | 30 December 2022 | CN | 115542308 | B | 31 March 2023 |
| CN | 115205891 | A | 18 October 2022 | None | | | |
| CN | 115390468 | A | 25 November 2022 | None | | | |

Form PCT/ISA/210 (patent family annex) (July 2022)

**EP 4 700 705 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310462214X